Europäisches Patentamt

European Patent Office

Office européen des brevets

(11) Veröffentlichungsnummer: **0 237 776**
**A2**

(19)

## (12) EUROPÄISCHE PATENTANMELDUNG

(21) Anmeldenummer: 87101889.1

(22) Anmeldetag: 11.02.87

(51) Int. Cl.⁴: **H02B 1/18** , **H01H 33/00**

(30) Priorität: 21.03.86 CH 1156/86

(43) Veröffentlichungstag der Anmeldung:
23.09.87 Patentblatt 87/39

(84) Benannte Vertragsstaaten:
CH DE FR LI SE

(71) Anmelder: **BBC Aktiengesellschaft Brown, Boveri & Cie.**
**Haselstrasse**
**CH-5401 Baden(CH)**

(72) Erfinder: **Mauthe, Gerhard**
**Seilersgrabeweg 13**
**CH-5413 Birmenstorf(CG)**

(54) **Hochspannungsschalter.**

(57) Der mit einem Isoliermedium gefüllte Hochspannungsschalter weist mindestens eine an einem von einer Isolatorsäule (1) getragenen Zentralgehäuse (2) befestigte Schaltkammer (3, 3a) auf. Im Bereich der mindestens einen Schaltkammer (3, 3a) ist mindestens ein Messkopf (6) montiert, in welchem ein Sensor (9) stromproportionale Messignale aufnimmt. Diese Messignale werden über einen Lichtleiter (16) übertragen zur weiteren Verarbeitung auf Erdpotential.

Ein Hochspannungsschalter soll geschaffen werden, bei welchem Sensoren (9, 39) mit einfachen Mitteln leicht zugänglich aussen im Bereich der Schaltkammer (3, 3a) montiert werden können. Dies wird dadurch erreicht, dass der mindestens eine Messkopf (6) in einem für die Montage aussen am Hochspannungsschalter geeigneten Gehäuse untergebracht ist. Der Lichtleiter (16) wird dabei druckdicht durch einen Verschlussdeckel (38) einer Montageöffnung in das Zentralgehäuse (2) geführt.

FIG.2

## Hochspannungsschalter

Die Erfindung geht aus von einem Hochspannungsschalter gemäss dem ersten Teil des Anspruchs 1.

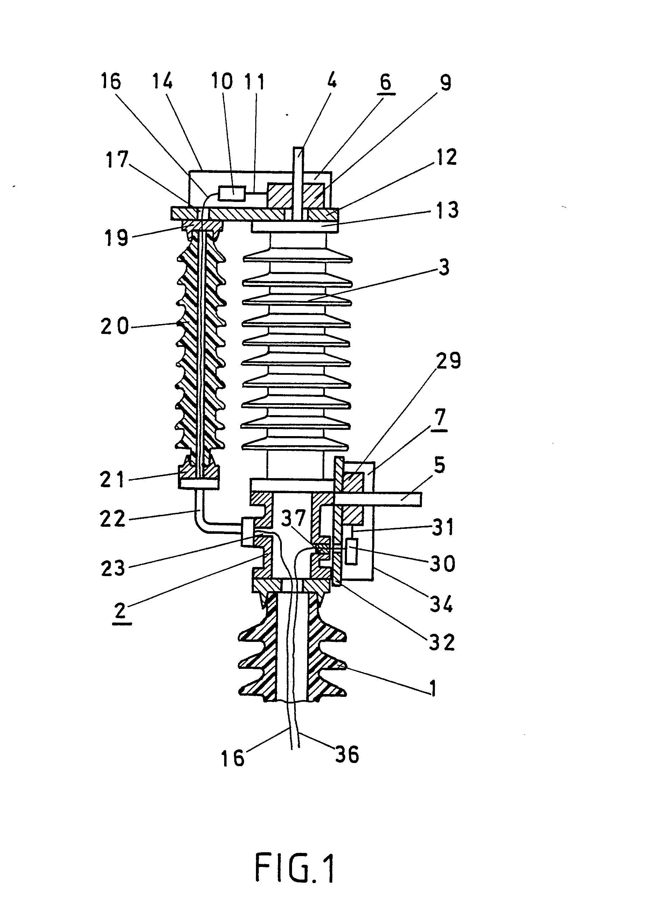

Aus der schweizerischen Patentschrift Nr. 648 415, insbesondere aus deren Fig. 1, ist ein mit einem Isoliermedium gefüllter Hochspannungsschalter bekannt, welcher mindestens eine von einer hohlen Isolatorsäule getragene und mit dieser über ein Zentralgehäuse verbundene Schaltkammer aufweist. Im Innern dieses Hochspannungsschalters, ist im Bereich der Schaltkammer ein Sensor angeordnet, welcher stromproportionale Messignale aufnimmt. Diese Messignale werden über im Innern der hohlen Isolatorsäule geführte Lichtleiter zur weiteren Verarbeitung auf Erdpotential übertragen.

Für den Einbau des Sensors müssen bei diesem Hochspannungsschalter konstruktive Vorkehrungen getroffen werden. Nach dem Einbau des Sensors ist dieser für etwaige Kontrollen oder Messbereichsänderungen nur noch sehr schwer, nämlich erst nach der Demontage der Schaltkammer, zugänglich.

Hier will die Erfindung Abhilfe schaffen. Die Erfindung, wie sie in den Ansprüchen gekennzeichnet ist, löst die Aufgabe, einen Hochspannungsschalter zu schaffen, bei welchem Sensoren mit einfachen Mitteln leicht zugänglich aussen im Bereich der Schaltkammer montiert werden können.

Die durch die Erfindung erreichten Vorteile sind im wesentlichen darin zu sehen, dass die Sensoren leicht und ohne Demontage der Schaltkammer zugänglich sind für etwaige Messbereichsumstellungen, Kontrollen oder Revisionen. Ferner ist die Nachrüstung von bereits gelieferten Hochspannungsschaltern mit Sensoren, z.B. wenn das Schutzkonzept einer bestehenden Hochspannungsschaltanlage aus betrieblichen Gründen geändert werden muss, mit vergleichsweise einfachen Mitteln und ohne nennenswerte Betriebsunterbrechungen in der Hochspannungsschaltanlage möglich.

Die weiteren Ausgestaltungen der Erfindung sind Gegenstände der abhängigen Ansprüche.

Im folgenden wird die Erfindung anhand der Zeichnungen näher erläutert.

Es zeigt:

Fig. 1 eine erste Ausführungsform des erfindungsgemässen Hochspannungsschalters und

Fig. 2 eine zweite Ausführungsform des erfindungsgemässen Hochspannungsschalters.

In beiden Figuren sind gleich wirkende Elemente mit gleichen Bezugszeichen versehen.

In Fig. 1 ist ein Hochspannungsschalter dargestellt, der ein senkrecht auf einer hohlen Isolatorsäule 1 befestigtes elektrisch leitendes Zentralgehäuse 2 aufweist, welches eine Schaltkammer 3 mit zwei Stromanschlüssen 4, 5 trägt. Der Hochspannungsschalter ist mit einem gasförmigen oder flüssigen Lösch-und Isoliermedium gefüllt. Antriebselemente, welche der Betätigung der Schaltkammer 3 dienen, sind in Fig. 1 nicht dargestellt. Im Bereich der Schaltkammer 3 sind ferner Messköpfe 6, 7 vorgesehen und zwar jeweils an den beiden Stromanschlüssen 4, 5, wobei der Stromanschluss 4 von oben her in Verbindung mit der Schaltkammer 3 steht, und seitlich der Stromanschluss 5 über das Zentralgehäuse 2 mit dem unteren Teil der Schaltkammer 3 verbunden ist. Dem Stromanschluss 4 ist der Messkopf 6 und dem Stromanschluss 5 der Messkopf 7 zugeordnet.

Der Messkopf 6 weist einen Sensor 9 auf, welcher den Stromanschluss 4 umgibt, ferner, sofern für das jeweilige Sensorprinzip nötig, eine Elektronikeinheit 10, die durch eine Messleitung 11 mit dem Sensor 9 verbunden ist. Der Sensor 9 und die Elektronikeinheit 10 stützen sich auf einen Zwischenflansch 12 ab, der vom Stromanschluss 4 durchdrungen wird und mit dem oberen Anschlussflansch 13 der Schaltkammer 3 in Verbindung steht. Zusammen mit einer Abdeckung 14 bildet der Zwischenflansch 12 ein Gehäuse, welches den Messkopf 6 gegen Umwelteinflüsse - schützt. Die Elektronikeinheit 10 weist mindestens einen Lichtleiterabgang auf in welchen mindestens ein Lichtleiter 16 steckbar eingeführt werden kann. Der mindestens eine Lichtleiter 16 wird durch eine Bohrung 17 im Zwischenflansch 12 geführt. Mit der Unterseite des Zwischenflansches 12 ist mittels eines Flansches 19 ein Isolier rohr 20 verbunden. Durch den Flansch 19 ist der mindestens eine Lichtleiter 16 druckdicht in das Innere des Isolierrohres 20 geführt. Die untere Seite des Isolierrohres 20 ist über eine Flanschverbindung 21 mit der einen Seite eines Winkelrohres 22 verbunden, dessen andere Seite druckdicht an eine Oeffnung 23 im Zentralgehäuse 2 angeflanscht ist. Der mindestens eine Lichtleiter 16 erstreckt sich durch das Isolierrohr 20, das Winkelrohr 22 und die Oeffnung 23 ins Innere des Zenralgehäuses 2 und von dort weiter in das Innere der Isolatorsäule 1, wo er gegen Erde geführt wird. Der mindestens eine Lichtleiter 16 weist zur Montageerleichterung steckbare Trennstellen auf. Am Fuss der Isolatorsäule 1 wird der mindestens eine Lichtleiter 16 druckdicht aus dem Schalterinneren heraus-und weitergeführt in eine nicht dargestellte Umsetzer-und Auswerteeinheit.

Die Oeffnung 23 im Zentralgehäuse kann beispielsweise auch grösser ausgeführt sein, als in Fig. 1 dargestellt, und kann als mit einem separaten Verschlussdeckel druckdicht verschliessbare Montageöffnung dienen. Solche Montageöffnungen werden vorgesehen, wenn nach dem Aufsetzen der Schaltkammer 3 auf das Zentralgehäuse 2 ein Zusammenkuppeln der Antriebselemente für die Schaltkammer 3 erfolgen muss. Das Winkelrohr 22 muss in diesem Fall an den Verschlussdeckel angeflanscht werden, welcher eine entsprechende Oeffnung für das Durchführen des mindestens einen Lichtleiters 16 aufweisen muss.

Das Isolierrohr 20 dient in Verbindung mit dem Winkelrohr 22 als starre Hülle für den mindestens einen Lichtleiter 16. Das Isolierrohr 20 kann aus Porzellan, aus aushärtbarem Kunstharz oder sonstigen Isoliermaterialien bestehen. Um die nötige Spannungsfestigkeit zu erreichen ist das Isolierrohr 20 im Innern mit dem Lösch-und Isoliermedium des Hochspannungsschalters gefüllt und weist aussen Isolierschirme auf. Es ist aber auch möglich den mindestens einen Lichtleiter 16 fugenlos mit aushärtbarem Kunstharz zu umgiessen und so, in Verbindung mit aussenliegenden Isolierschirmen die nötige Spannungsfestigkeit der starren Hülle zu erreichen. Zwischen dem Isolierrohr 20 und dem Winkelrohr 22 kann auch ein Kompensationselement eingebaut werden, welches unterschiedliche Längsdehnungen zwischen der starren Hülle und der Schaltkammer 3 ausgleichen kann.

Der Messkopf 7 ist ähnlich aufgebaut wie der Messkopf 6. Ein Sensor 29 umgibt den Stromanschluss 5. Eine Elektronikeinheit 30 ist durch eine Messleitung 31 mit dem Sensor 29 verbunden. Der Sensor 29 und die Elektronikeinheit 30 werden durch einen Zwischenflansch 32 gehalten, welcher mit dem Zentralgehäuse 2 verbunden ist. Der Stromanschluss 5 durchdringt den Zwischenflansch 32 und steht über das Zentralgehäuse 2 in elektrisch leitender Verbindung mit dem unteren Teil der Schaltkammer 3. Der Zwischenflansch 32 bildet zusammen mit einer Abdeckung 34 ein Gehäuse, welches den Messkopf 7 gegen Umwelteinflüsse - schützt. Von der Elektronikeinheit 30 führt auf bekannte Art mindestens ein Lichtleiter 36 durch eine Bohrung des Zwischenflansches 32 und eine mit einer druckdichten Durchführung versehene Oeffnung 37 in das Zentralgehäuse 2 und von dort nach Erde.

Zur Erläuterung der Wirkungsweise sei die Fig. 1, und zwar zunächst nur der auf Hochspannungspotential liegende Messkopf 6 näher betrachtet. Der Sensor 9 erzeugt ein Messignal proportional zum zwischen den Stromanschlüssen 4 und 5 fliessenden Strom. Dieses Messignal wird durch die Messleitung 11 in die Elektronikeinheit 10 geleitet. In dieser Elektronikeinheit 10 wird das Messignal in Lichtimpulse umgesetzt, welche über mindestens einen Lichtleiter 16 vom Hochspannungspotential nach Erde übertragen und dort in einer Umsetzer- und Auswerteeinheit weiter verarbeitet werden zu Signalen, welche für Mess-und Schutzzwecke einsetzbar sind. Die Energieversorgung der Elektronikeinheit 10 kann durch Batterien, durch das Messignal selbst oder über einen Wandler erfolgen, welcher den Stromanschluss 4 umgibt.

Der Sensor 9 kann einen Stromwandler, eine Rogowski-Spule oder sonst ein bekanntes Messelement enthalten. Ferner ist es möglich auch Sensoren 9 einzusetzen, die unter Ausnutzung des Faraday-Effektes als magnetooptische Stromwandler arbeiten. Bei dieser letzteren Variante kann die Elektronikeinheit 10 entfallen, da der mindestens eine Lichtleiter 16 selber als Sensor um den Stromanschluss 4 gewickelt wird, wobei das Lichtsignal auf Erdpotential generiert wird.

Der Messkopf 7 kann entsprechend ausgerüstet werden wie der Messkopf 6. Es ist aber auch leicht möglich, unterschiedliche Sensoren in die beiden Messköpfe 6 und 7 einzubauen, um so eine bessere Redundanz und eine geringere Störungsanfälligkeit des Messsystems zu erreichen. Ferner kann es genügen, je nach Betriebsfall, auch nur einen der Messköpfe 6, 7 zu montieren. Da sie sehr leicht zugänglich sind, ist es auch möglich bei kurzen Betriebsunterbrechungen eventuell Sensoren des einen Typs gegen solche eines anderen Typs auszutauschen.

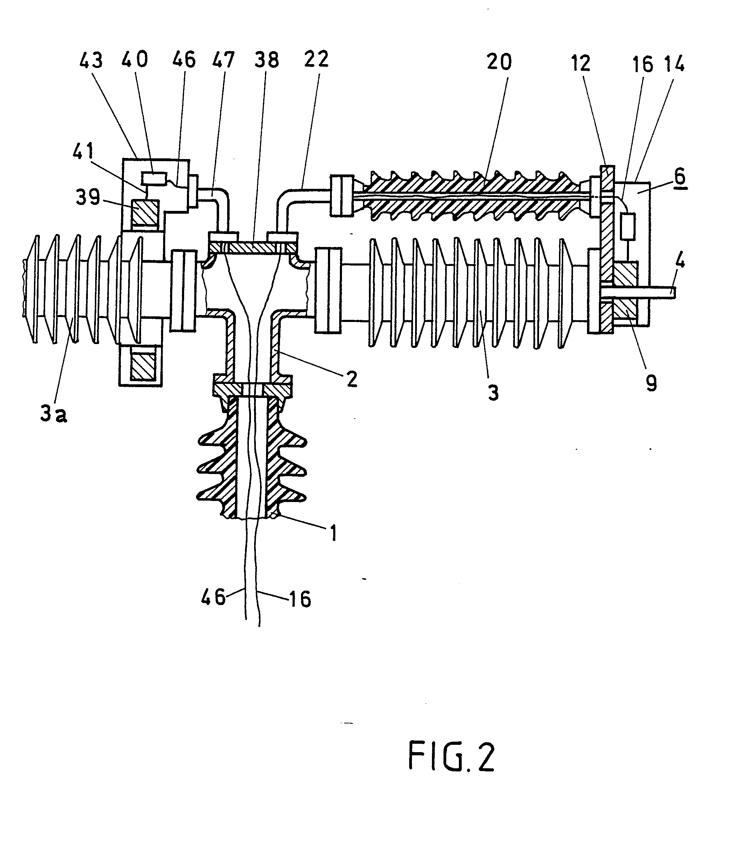

In Fig. 2 ist ein Hochspannungsschalter mit zwei waagrecht liegenden Schaltkammern 3, 3a dargestellt. Die rechte Schaltkammer 3 ist mit einem Messkopf 6 versehen, wie er auch in Fig. 1 dargestellt ist. Das Zentralgehäuse 2 weist eine mit einem Verschlussdeckel 38 druckdicht abgedeckte Montageöffnung auf. Das Winkelrohr 22 ist hier auf diesen Verschlussdeckel 38 geflanscht und der Lichtleiter 16 wird durch das Winkelrohr 22 und eine entsprechende Bohrung im Verschlussdeckel 38 in das Zentralgehäuse 2 geführt. In Fig. 2 sind ebenfalls keine Antriebselemente für die Betätigung der Schaltkammern 3, 3a dargestellt.

Im linken Teil der Fig. 2 ist eine weitere mögliche Ausführung eines Messkopfes dargestellt. Ein Sensor 39 umgibt die Schaltkammer 3a antriebsseitig. Eine Elektronikeinheit 40 ist über eine Messleitung 41 mit dem Sensor 39 verbunden. Ein mehrteiliges Gehäuse 43 schliesst diesen Messkopf ein und trägt ihn, wobei der Innendurchmesser des Gehäuses 43 so dimensioniert ist, dass es aussen über die Schaltkammer 3a geführt werden kann. Von der Elektronikeinheit 40 wird ein Lichtleiter 46 druckdicht in ein Winkelrohr 47 eingeführt und durch dieses und durch den Verschlussdeckel 38 hindurch in das Zentralgehäuse 2 geleitet. Das Winkelrohr 47 dient gleichzeitig als Träger für das Gehäuse 43.

Das Gehäuse 43 kann auch so ausgestaltet sein, dass es direkt mit dem Verschlussdeckel 38 zusammenflanschbar ist. In diesem Fall muss im Verschlussdeckel 38 eine druckdichte Durchführung für den Lichtleiter 46 vorgesehen werden.

Sollten die Schaltkammern 3, 3a im Winkel zueinander montiert werden, so lassen sich die Winkelrohre 21 und 47 an jeden Winkel anpassen.

Bei Hochspannungsschaltern mit mehr als zwei Schaltkammern in Reihe lassen sich die in Fig. 2 gezeigten Messköpfe ebenfalls einbauen. Ferner ist der Einsatz der Messköpfe nicht auf Hochspannungsschalter beschränkt, sie können ebenso bei Hochspannungstrennern und anderen Schaltgeräten angebaut werden.

In Hochspannungsschaltanlagen, in welchen Sammelschienen mittels Isolatorsäulen gegen Erde abgestützt sind, lassen sich derartige Messköpfe ebenfalls vorteilhaft einsetzen, wobei die Sensoren um die Sammelschiene gelegt werden und die Lichtleiter durch das Innere der Isolatorsäulen, die in der Regel nicht unter Druck stehen, besonders einfach gegen Erde geführt werden können.

## Ansprüche

1. Hochspannungsschalter mit einem gasförmigen oder flüssigen Isoliermedium, mit mindestens einer an einem von einer hohlen Isolatorsäule (1) getragenen Zentralgehäuse (2) befestigten Schaltkammer (3, 3a), mit mindestens einem Messkopf (6, 7) im Bereich der mindestens einen Schaltkammer (3, 3a), in welchem mindestens ein Sensor (9, 29, 39) stromproportionale Messsignale aufnimmt, die über mindestens einen Lichtleiter (16, 36, 46) zur weiteren Verarbeitung auf Erdpotential übertragbar sind, dadurch gekennzeichnet,
-dass der mindestens eine Messkopf (6, 7) in einem für die Montage aussen am Hochspannungsschalter geeigneten Gehäuse (43) untergebracht ist, und
-dass der mindestens eine Lichtleiter (16, 36, 46) druckdicht durch einen Verschlussdeckel (38) einer Montageöffnung in das Zentralgehäuse (2) geführt wird.

2. Hochspannungsschalter nach Anspruch 1, dadurch gekennzeichnet,
-dass der mindestens eine Lichtleiter (16, 36, 46) zwischen Messkopf (6, 7) und Zentralgehäuse (2) von einer starren, mindestens einteiligen Hülle umgeben ist.

3. Hochspannungsschalter nach Anspruch 2, dadurch gekennzeichnet,
-dass die starre Hülle zumindest teilweise aus aushärtbarem Kunstharz so ausgebildet ist, dass sie den mindestens einem Lichtleiter (16, 36, 46) fugenlos umgibt.

4. Hochspannungsschalter nach Anspruch 2, dadurch gekennzeichnet,
-dass die starre Hülle zumindest teilweise als Isolierrohr (20) ausgebildet ist, dessen Inneres mit dem Isoliermedium gefüllt ist.

5. Hochspannungsschalter nach einem der Ansprüche 2 bis 4, dadurch gekennzeichnet,
-dass die starre Hülle ein Kompensationselement aufweist.

6. Hochspannungsschalter nach einem der Ansprüche 2 bis 5, dadurch gekennzeichnet,
-dass ein Teil der starren Hülle als an den Verschlussdeckel (38) anflanschbares Winkelrohr (22, 47) ausgebildet ist.

7. Hochspannungsschalter nach Anspruch 1, dadurch gekennzeichnet,
-dass das den Messkopf enthaltende Gehäuse - (43) so ausgebildet ist, dass es mit dem Verschlussdeckel (38) für die Montageöffnung des Zentralgehäuses (2) zusammenflanschbar ist.

FIG.1

FIG.2